# EUROPEAN PATENT SPECIFICATION

(11) **EP 1 815 153 B1**
(45) Date of publication and mention of the grant of the patent: **02.04.2008**
(21) Application number: 05787431.5
(22) Date of filing: 29.09.2005
(51) Int. Cl.: F16B 41/00, F16B 31/02

(54) **CONNECTING ELEMENT COMPRISING AN INNER SLEEVE AND AN OUTER SLEEVE INTERCONNECTED TO THE INNER**
EINE INNENHÜLSE UND EINE MIT DER INNENHÜLSE VERBUNDENE AUSSENHÜLSE UMFASSENDES VERBINDUNGSELEMENT
ELEMENT DE CONNEXION COMPRENANT UN MANCHON INTERIEUR ET UN MANCHON EXTERIEUR INTERCONNECTE AU MANCHON INTERIEUR

(30) Priority: 15.10.2004 NL 1027269
(43) Date of publication of application: 08.08.2007
(73) Proprietor: Notermans, Ernest Gerardus Hubertus, 6372 BB Landgraaf (NL)
(72) Inventor: Notermans, Ernest Gerardus Hubertus, 6372 BB Landgraaf (NL)
(74) Representative: Seezink, George
(86) International application number: PCT/NL2005/000703
(87) International publication number: WO 2006/041282

(56) References cited:
- US-A- 5 927 917

## Description

The invention relates to a connecting element comprising an inner sleeve and an outer sleeve interconnected to said inner sleeve, which connecting element can be rotated in a direction of rotation.

Such a connecting element is known from US-5,927,917. In this known connecting element, an inner sleeve and the outer sleeve are interconnected. The connecting element can be screwed down on a screw thread up to a predetermined torque value. When the predetermined torque is exceeded, the outer sleeve is disconnected from the inner sleeve, as a result of which the outer sleeve can freely rotate about the inner sleeve and the connecting element cannot easily be removed.

The drawback of the known connecting element is that it is difficult to determine whether the inner sleeve is loosely or firmly screwed down and secured on the screw thread because the outer sleeve can be freely rotated.

The object of the present invention is to provide a connecting element which makes it easy to detect that the connecting element has undesirably been loosened.

This object is accomplished with the connecting element according to the invention in that a sealed interconnection exists between the inner sleeve and the outer sleeve in a first, sealed position, with the inner sleeve being movable relative to the outer sleeve from said first, sealed position to a second position after rotation of the connecting element in a direction opposed to said direction of rotation, from which second position the inner sleeve and the outer sleeve cannot be returned to the first, sealed position any more.

The connecting element according to the invention makes it easy to determine whether the connecting element has been accidentally or intentionally loosened, because the outer sleeve has been moved to the second position relative to the inner sleeve. Since the outer sleeve cannot be returned from the second position to the first, sealed position relative to the inner sleeve, rotation of the connecting element in an undesirable direction cannot be undone. Movement from the first position to the second position is an irreversible action, therefore, which can be detected.

One embodiment of the connecting element according to the invention is characterized in that the inner sleeve is axially displaced relative to the outer sleeve in the second position.

Such an axial displacement, which takes place upon movement of the sleeves from a first position to a second position, makes it easy to visually detect that the connecting element has been loosened.

Another embodiment of the connecting element according to the invention is characterized in that the inner sleeve can be rotated through a predetermined angle relative to the outer sleeve in the second position.

The fact that a connecting element has been loosened can readily be perceived by tactile means, because it is possible to rotate the inner sleeve through a predetermined angle with respect to the outer sleeve.

Yet another embodiment of the connecting element according to the invention is characterized in that one of the sleeves comprises at least one sloping surface, whilst the other sleeve comprises an element that is movable over said sloping surface, said element being movable over said sloping surface to the second position by being rotated against the aforesaid direction of rotation, in which second position the sleeve comprising said element is axially displaced relative to the other sleeve.

Axial movement can be realised in a simple manner by means of the element that is movable over said sloping surface, so that subsequently the fact that the seal of the connecting element has been broken can be visually detected.

Another embodiment of the connecting element according to the invention is characterized in that one of the sleeves comprises at least one spring element, whilst the other sleeve comprises a step that mates with the spring element, said spring element being movable against spring force over said step in a direction opposed to the direction of rotation, said spring element taking up a position behind the step, seen in the direction of rotation, under the influence of a spring force in the second position, in which position the step locks the outer sleeve against rotation in the direction of rotation relative to the inner sleeve.

The step effects an irreversible change after an outer sleeve has been loosened from a first, sealed position in that the step prevents the spring element positioned behind the step, seen in the direction of rotation, from rotating back in the direction of rotation from the second position to the first, sealed position.

Yet another embodiment of the connecting element according to the invention is characterized in that said sloping surface is positioned just behind the step, seen in the direction of rotation, with the sloping surface extending transversely to the step.

In this way the step prevents rotation in a direction opposed to the direction of rotation, whilst the sloping surface enables axial movement, so that it can be visually detected that a seal has been broken.

Yet another embodiment of the connecting element according to the invention is characterized in that a guide surface is positioned before the step, seen in the direction of rotation, so that a threshold force is required for rotating the connecting element against the direction of rotation from the first, sealed position to the second position.

Said threshold force is necessary in order to prevent the connecting element from being moved from the first, sealed position to the second position by any force that may be exerted on the outer sleeve. The threshold force is mainly determined by the angle of inclination of the guide surface as well as by the spring force of the spring element.

Yet another embodiment of the connecting element according to the invention is characterized in that a spring lip can be moved against spring force over a step in a direction of movement extending parallel to the central axis of the connecting element for the purpose of interconnecting the inner sleeve to the outer sleeve in the first, sealed position, after which the spring lip takes up a position before the step, seen in the direction of movement, under the influence of a spring force, in which position the step prevents movement in a direction opposed to the direction of movement.

In this way the outer sleeve and the inner sleeve of the connecting element are effectively interconnected in the first, sealed position, in which the step and the spring lip lock the sleeves against movement in the direction opposed to the direction of movement and the sleeves cannot be disconnected from each other.

Yet another embodiment of the connecting element according to the invention is characterized in that the spring element comprises said spring lip.

In this way the number of different parts for interconnecting the inner sleeve and the outer sleeve is reduced.

Yet another embodiment of the connecting element according to the invention is characterized in that the connecting element can be rotated in the direction of rotation in the first, sealed position, in which position a projection on the inner sleeve abuts against a projection on the outer sleeve.

A connecting element can be screwed down on or in a screw thread, for example, by means of the projections on the inner sleeve and the outer sleeve that abut against each other in the direction of rotation. The connecting function of the connecting element, which is generally known, is realised by means of said projections.

Yet another embodiment of the connecting element according to the invention is characterized in that the connecting element can be rotated in a direction opposed to the direction of rotation in the second position, in which position a part present on the inner sleeve abuts against a part present on the outer sleeve.

In this way the connecting element can easily be rotated in a direction of, for example, a screw thread opposed to the direction of rotation.

Yet another embodiment of the connecting element according to the invention is characterized in that the connecting element is a nut, whose inner sleeve is provided with internal screw thread.

The use of such a nut enables easy detection of accidental or intentional loosening of the nut from a screw thread or a conventional bolt.

Yet another embodiment of the connecting element according to the invention is characterized in that the connecting element is a bolt or a screw, with a stud being positioned within the inner sleeve, which stud is provided with external screw thread.

The use of such a bolt or screw enables easy detection of accidental or intentional loosening of said bolt or screw. The projection may be secured in the inner sleeve or be integral therewith.

Yet another embodiment of the connecting element according to the invention is characterized in that the connecting element is a socket screw, and in that the outer sleeve has a projection fixedly connected thereto, which projection is provided with external screw thread.

The use of such a socket screw enables easy detection of accidental or intentional loosening of said bolt or screw.

The invention will now be explained in more detail with reference to the appended figures, in which:
Figure 1 is a perspective front view of a sealed nut according to the present invention;
Figure 2 is a perspective front view of an outer sleeve and an inner sleeve of the nut according to the present invention before the two are mounted together;
Figure 3 is a perspective rear view of an outer sleeve and an inner sleeve of the nut that is shown in figure 2;
Figure 4 is a perspective front view of an unsealed nut according to the present invention;
Figures 5a and 5b are a perspective sectioned view and an enlarged sectional view, respectively, showing the way the outer sleeve is mounted on the inner sleeve;
Figures 6a, 6b, 6c and 6d are perspective views of the movement of the outer sleeve relative to the inner sleeve of the nut according to the present invention from a first position to a second position;
Figure 7 is a perspective cutaway view of the movement of a spring element in the nut according to the invention from a first, sealed position to a second position;
Figures 8a and 8b are sectional views of a part of the nut according to the invention, which show the movement of a spring element from a first, sealed position to a second position.

Like parts are indicated by the same numerals in the various figures.

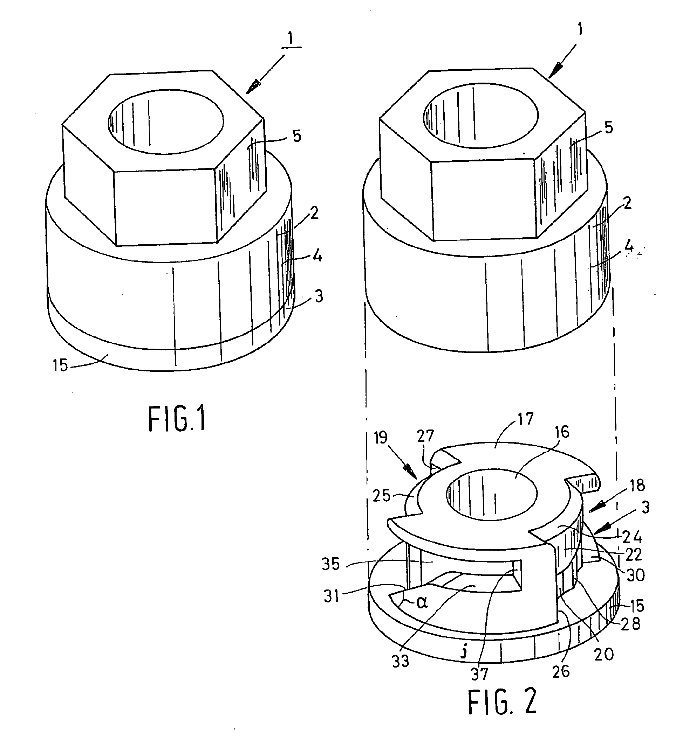

Figs. 1-4 show a nut 1 according to the invention, which nut 1 comprises an outer sleeve 2 and an inner sleeve 3.

The outer sleeve 2 comprises a cylindrical part 4 on the outer side and an adjoining hexagonal part 5. Said hexagonal part 5 can be used for screwing the nut 1 down on, for example, a threaded bolt (not shown), for example by means of a spanner.

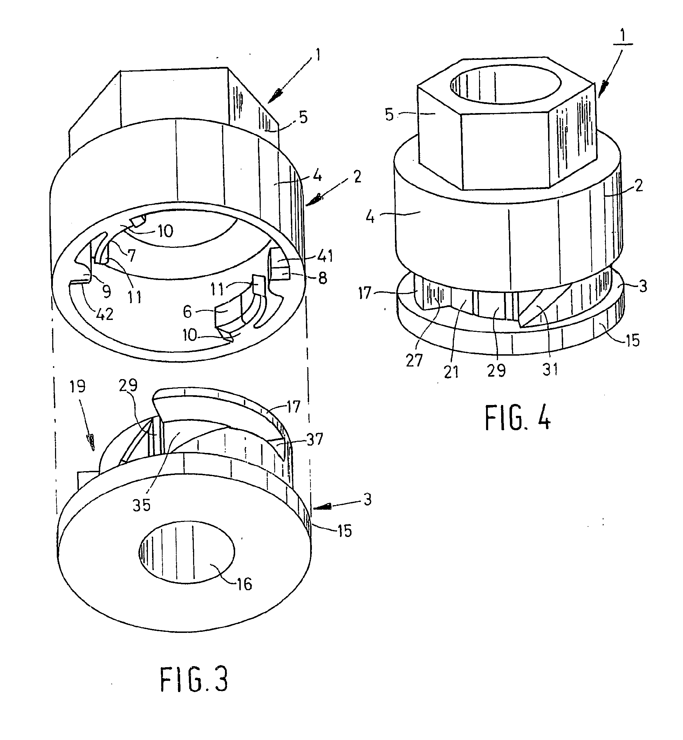

Present on the inner side of the cylindrical part 4 are two diametrically opposed spring elements 6, 7 as well as two diametrically opposed projections 8, 9 (figure 3). The two spring elements 6, 7 each comprise a radially projecting part 10, which is fixedly connected to the inner side of the cylindrical part 4, to which a spring part 11 extending parallel to the circumference of the cylindrical part 4 is connected. The radially extending projections 8, 9 are spaced from the two spring elements 6, 7.

The inner sleeve 3 comprises a disc-shaped part 15 as well as an opening 16 extending in the axial direction, which opening is provided with internal screw thread (not shown).

The inner sleeve 3 (figure 2) furthermore comprises an axially extending, cylindrical guide member 17 on the disc-shaped part 15. The cylindrical guide member 17 is provided with two diametrically opposed, axially extending recessed parts 18, 19. Recesses 20, 21 and steps 22, 23 extending parallel to the circumference of the disc-shaped part 15, seen in axial direction from the disc-shaped part 15, are formed in said recessed parts 18, 19. Inclined sides 24, 25 are located between the radially extending steps 22, 23 and the guide member 17, the central axes of which inclined sides 24, 25 include an angle of about 45 degrees with the steps 22, 23. The recesses 20, 21 are each enclosed in radial direction by a side 26, 27 of the recessed parts 18, 19 and an axially extending step 28, 29. Positioned between the two axially extending recessed parts 18, 19 are two diametrically opposed, sloping surfaces 30, 31, which extend at an angle α from the disc-shaped part 15. The sloping surfaces 30, 31 blend into surfaces 32, 33 extending parallel to the disc-shaped part 15. The surfaces 30, 31, 32, 33 and the guide member 17 bound cavities 34, 35 extending parallel to the circumference of the disc-shaped part 15. In radial direction, the cavities 34, 35 are bounded by axially extending surfaces 36, 37 of the guide member 17 on one side, whilst the cavities 34, 35 are in communication with the recessed parts 18, 19 on the other side.

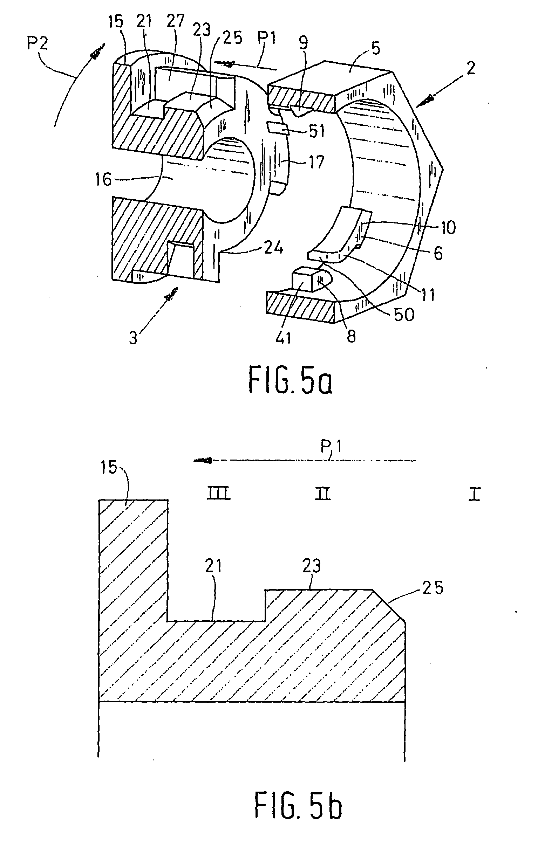

The interconnection of the inner sleeve 3 to the outer sleeve 2 of the nut 1 according to the invention will now be discussed with reference to figures 1-4 as discussed above and figures 5a and 5b.

Figure 5a is a perspective, sectioned view of the outer sleeve 2, in which the two spring elements 6, 7 as well as the two projections 8, 9 are located on the inner side of the hexagonal part 5 instead of on the inner side of the cylindrical part 4.

To interconnect the outer sleeve 2 to the inner sleeve 3, the spring elements 6, 7 are aligned with the steps 22, 23 in the recessed parts 18, 19 of the guide member 17. After said alignment, the outer sleeve 2 is moved in a direction indicated by the arrow P1 towards the inner sleeve 3 (indicated at I in figure 5b). The inclined sides 24, 26 of the steps 22, 23 cause the spring elements 6, 7 to move against spring force towards the inner side of the hexagonal part 5, as a result of which said spring elements can pass the steps 22, 23 (indicated at II in figure 5b). Once the spring elements 6, 7 have passed the steps 22, 23, they are positioned in the recesses 20, 21 (indicated at III in figure 5b). In that situation the outer sleeve 2 is connected to the inner sleeve 3 in the first, sealed position of the nut 1 (see figure 1).

In the first, sealed position, the outer sleeve 2 is locked against movement in the opposite direction of the arrow P1 because movement of the spring elements 6, 7 in this direction is halted by the steps 22, 23.

In the first position, the nut 1 can be rotated in a direction of rotation indicated by the arrow P2 (figure 5a) on, for example, a screw thread of a bolt (not shown). Rotation of the nut 1 moves the sides 41, 42 of the projections 8, 9 into abutment with the surfaces 26, 27 of the guide member 17. Because of the abutment of the sides 26, 27 and the sides 41, 42, a power transmission can take place between the outer sleeve 2 and the inner sleeve 3. Said power transmission between the outer sleeve 2 and the inner sleeve 3 makes it possible to screw the nut 1 onto screw thread of a bolt or a stud by rotating the nut 1 in the direction indicated by the arrow P2.

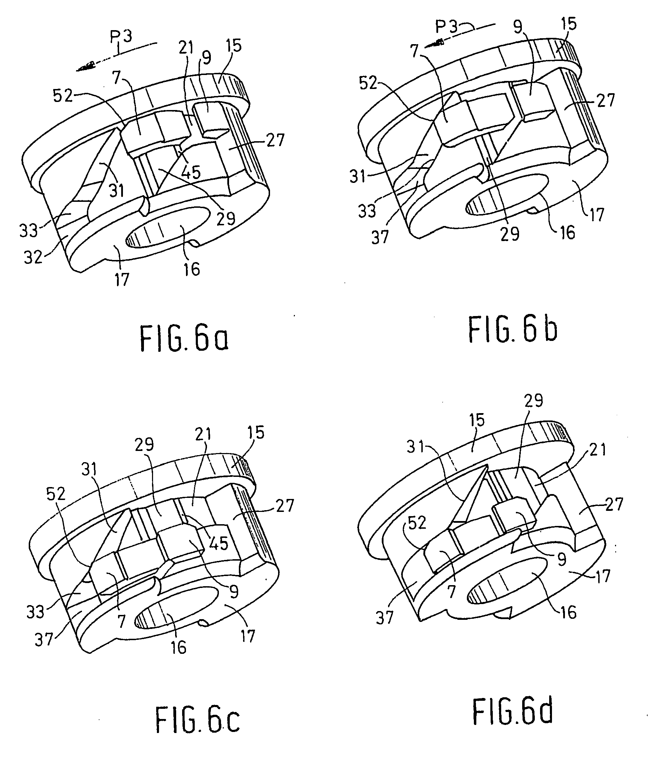

The rotation of the outer sleeve 3 relative to the inner sleeve 2 in the opposite direction of the arrow P2, which direction is indicated by the arrow P3, will now be discussed with reference to the figures as discussed above in conjunction with figures 6a, 6b, 6c, 6d, 7, and figures 8a, 8b.

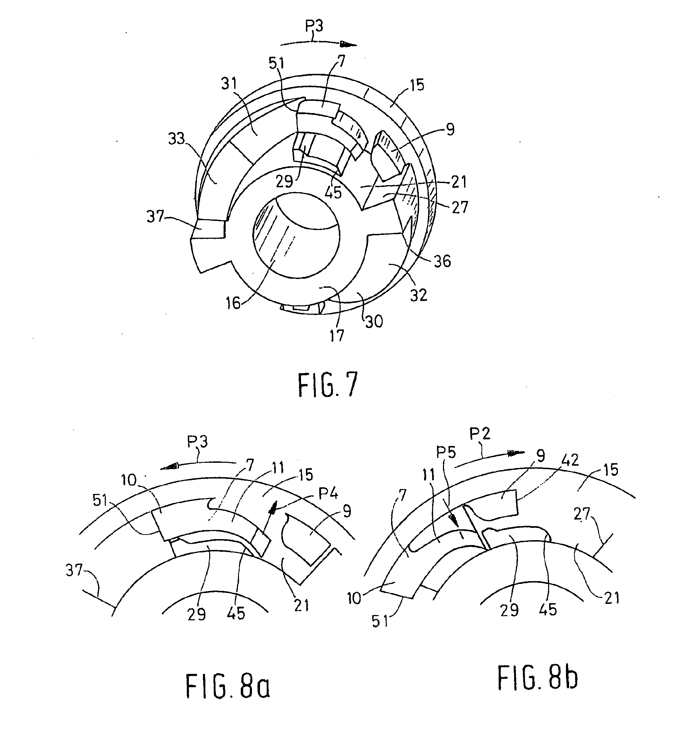

When the spring elements 6, 7 positioned in the recesses 20, 21 are rotated with sufficient force in the direction indicated by the arrow P3, the spring elements 6, 7 will be moved towards the guide surfaces 45 of the steps 28, 29. Via said guide surfaces 45, the spring elements 6, 7 are moved against spring force towards the inner side of the hexagonal part 5 (indicated by the arrow P4 in figure 8a), enabling said spring elements to pass the steps 28, 29.

The sloping surfaces 30, 31 are positioned behind the steps 28, 29, seen in the direction of rotation indicated by the arrow P2. The sloping surfaces 30, 31 extend transversely to the steps 28, 29.

Upon passing the steps 28, 29, the spring elements 6, 7 move in radial direction along the disc-shaped part 15 of the inner sleeve 20 (figure 7a). Once the spring elements 6, 7 have passed the steps 28, 29, the spring elements 6, 7 move not only in radial direction but also in axial direction (figures 6b and 6c) via the sloping surface 32, 33. The spring elements 6, 7 are moved to the second position (figure 6d and figure 8b) via the sloping surfaces 30, 31. The second position has been reached as soon as the spring elements 6, 7 take up a position behind the steps 28, 29 (seen in the direction of rotation as indicated by the arrow P2) under the influence of a spring force as indicated by the arrow P5 in figure 8b, so that rotation in the direction indicated by the arrow P2 (figure 8b) is not possible.

The movement of the spring elements 6, 7 over the sloping surfaces 30, 31 has caused the outer sleeve 2 to move in axial direction relative to the inner sleeve 3 (figure 4). This axial movement can be visually detected.

Furthermore, the outer sleeve 2 can be rotated through a predetermined angle with respect to the inner sleeve 3 in the second position, because the spacing between the steps 28, 29 and the sides 36, 37 of the guide member 17 is larger than the length of the spring elements 6, 7. Said movement through said predetermined angle can be perceived by tactile means.

The nut 1 can be unscrewed from, for example, the screw thread of a bolt in the second position (figure 4) in that rotation of the outer sleeve 2 in the direction indicated by the arrow P3 causes the surfaces 50, 51 of the spring elements 6, 7 to move into abutment with the surfaces 36, 37. Because of the abutment between the sides 50, 51 and the sides 36, 37, a power transmission can take place between the outer sleeve 2 and the inner sleeve 3. Said power transmission between the outer sleeve 2 and the inner sleeve 3 makes it possible to unscrew the nut 1 from a screw thread of a bolt by rotating the nut 1 in the opposite direction of the arrow P2.

Preferably, the spring element 6, 7 has a truncated corner point 52 (figures 6a-d), so that the spring element 6, 7 will be easier to move over the sloping surface 30, 31.

The slope of the guide surfaces 45 (see figures 8a and 8b) in conjunction with the spring constant of the spring element 6, 7 substantially determines the threshold force required for enabling movement from the first position (in figure 4) to the second position (in figure 5). The threshold force can be determined by varying the slope and/or the spring constant.

The embodiments as shown herein are based on right-hand internal screw thread. It is also possible, however, to use left-hand internal screw thread, in which case a mirror image configuration of the inner sleeve and of the position of the spring elements 6, 7 and the projections 8, 9 will be used.

It is also possible to configure a connecting element other than the nut that is shown in the figures, such as a bolt, a screw or a socket screw, with the features of the connecting element according to the invention.

It is possible to provide the connecting element with an identification number and/or with self-locking screw thread.

## Claims

1. A connecting element (1) comprising an inner sleeve (3) and an outer sleeve (2) interconnected to said inner sleeve (3), which connecting element (1) can be rotated in a direction of rotation, **characterized in that** a sealed interconnection exists between the inner sleeve (3) and the outer sleeve (2) in a first, sealed position, with the inner sleeve (3) being movable relative to the outer sleeve (2) from said first, sealed position to a second position after rotation of the connecting element (1) in a direction opposed to said direction of rotation, from which second position the inner sleeve (3) and the outer sleeve (2) cannot be returned to the first, sealed position any more.

2. A connecting element according to claim 1, **characterized in that** the inner sleeve (3) is axially displaced relative to the outer sleeve (2) in said second position.

3. A connecting element according to claim 1 or 2, **characterized in that** the inner sleeve (3) can be rotated through a predetermined angle relative to the outer sleeve (2) in the second position.

4. A connecting element according to any one of the preceding claims 1-3, **characterized in that** one of the sleeves (2,3) comprises at least one sloping surface (30,31), whilst the other sleeve comprises an element (6,7) that is movable over said sloping surface (30,31), said element (6,7) being movable over said sloping surface (30,31) to the second position by being rotated against the aforesaid direction of rotation, in which second position the sleeve comprising said element (6, 7) is axially displaced relative to the other sleeve.

5. A connecting element according to any one of the preceding claims, **characterized in that** one of the sleeves comprises at least one spring element (11), whilst the other sleeve comprises a step (28,29) that mates with the spring element (11), said spring element (11) being movable against spring force over said step (28,29) in a direction opposed to the direction of rotation, said spring element (11) taking up a position behind the step (28,29), seen in the direction of rotation, under the influence of a spring force in the second position, in which position said step (28,29) locks the outer sleeve (2) against rotation in the direction of rotation relative to the inner sleeve (3).

6. A connecting element according to claim 5, **characterized in that** said sloping surface (30,31) is positioned just behind the step (28,29), seen in the direction of rotation, with the sloping surface (30,31) extending transversely to the step (28,29).

7. A connecting element according to claim 5 or 6, **characterized in that** a guide surface (45) is positioned before the step (28,29), seen in the direction of rotation, so that a threshold force is required for rotating the connecting element (1) against the direction of rotation from the first, sealed position to the second position.

8. A connecting element according to any one of the preceding claims **characterized in that** a spring lip can be moved against spring force over a step (22,23) in a direction of movement extending parallel to the central axis of the connecting element (1) for the purpose of interconnecting the inner sleeve (3) to the outer sleeve (2) in the first, sealed position, after which the spring lip takes up a position before the step (22,23), seen in the direction of movement, under the influence of a spring force, in which position the step (22,23) prevents movement in a direction opposed to the direction of movement.

9. A connecting element according to claim 8 and any of claims 4 or 5, **characterized in that** said spring element (6,7) comprises said spring lip.

10. A connecting element according to any one of the preceding claims, **characterized in that** the connecting element (1) can be rotated in the direction of rotation in the first, sealed position, in which position a projection (26,27) on the inner sleeve (3) abuts against a projection (8,9) on the outer sleeve (2).

11. A connecting element according to any one of the preceding claims, **characterized in that** the connecting element (1) can be rotated in a direction opposed to the direction of rotation in the second position, in which position a part present on the inner sleeve abuts against a part present on the outer sleeve.

12. A connecting element according to any one of the preceding claims, **characterized in that** the connecting element (1) is a nut, whose inner sleeve (3) is provided with internal screw thread.

13. A connecting element according to any one of the preceding claims 1-11, **characterized in that** the connecting element (1) is a bolt or a screw, with a stud being positioned within the inner sleeve (3), which stud is provided with external screw thread.

14. A connecting element according to any one of the preceding claims 1-11, **characterized in that** the connecting element (1) is a socket screw, and **in that** the outer sleeve (2) has a projection fixedly connected thereto, which projection is provided with external screw thread.

## Patentansprüche

1. Verbindungselement (1), mit einer Innenhülse (3) und einer Außenhülse (2), die mit der Innenhülse (3) verbunden ist, wobei das Verbindungselement (1) in eine Drehrichtung gedreht werden kann, **dadurch gekennzeichnet, dass** eine abgedichtete Verbindung zwischen der Innenhülse (3) und der Außenhülse (2) in einer ersten, abdichteten Stellung besteht, wobei die Innenhülse (3) relativ zu der Außenhülse (2) aus der ersten, abgedichteten Stellung in eine zweite Stellung nach Drehung des Verbindungselements (1) in eine der Drehrichtung entgegengesetzte Richtung beweglich ist, wobei die Innenhülse (3) und die Außenhülse (2) nicht mehr aus der zweiten Stellung in die erste, abgedichtete Stellung zurückgeführt werden können.

2. Verbindungselement nach Anspruch 1, **dadurch gekennzeichnet, dass** die Innenhülse (3) in der zweiten Stellung relativ zu der Außenhülse (2) axial verschoben ist.

3. Verbindungselement nach Anspruch 1 oder 2, **dadurch gekennzeichnet, dass** die Innenhülse (3) in der zweiten Stellung um einen vorbestimmten Winkel relativ zu der Außenhülse (2) gedreht werden kann.

4. Verbindungselement nach einem der vorhergehenden Ansprüche 1 bis 3, **dadurch gekennzeichnet, dass** eine der Hülsen (2, 3) zumindest eine schräge Fläche (30, 31) aufweist, während die andere Hülse ein Element (6, 7) aufweist, das die über die schräge Fläche (30, 31) bewegbar ist, wobei das Element (6, 7) über die schräge Fläche (30, 31) in die zweite Stellung bewegbar ist, indem es gegen die oben genannte Drehrichtung gedreht wird, wobei die Hülse, die das Element (6, 7) aufweist, in der zweiten Stellung relativ zu der anderen Hülse axial versetzt ist.

5. Verbindungselement nach einem der vorhergehenden Ansprüche, **dadurch gekennzeichnet, dass** eine der Hülsen zumindest ein Federelement (11) aufweist, während die andere Hülse eine Stufe (28, 29) aufweist, die mit dem Federelement (11) zusammenwirkt, wobei das Federelement (11) gegen eine Federkraft über die Stufe (28, 29) in eine der Drehrichtung entgegengesetzten Richtung bewegbar ist, wobei das Federelement (11) in der zweiten Stellung in der Drehrichtung gesehen unter dem Einfluss einer Federkraft eine Stellung hinter der Stufe (28, 29) einnimmt, wobei die Stufe (28, 29) in dieser Stellung die Außenhülse (2) gegen eine Drehung in der Drehrichtung relativ zu der Innenhülse (3) sperrt.

6. Verbindungselement nach Anspruch 5, **dadurch gekennzeichnet, dass** die schräge Fläche (30, 31) in der Drehrichtung gesehen gerade hinter der Stufe (28, 29) angeordnet ist, wobei sich die schräge Fläche (30, 31) quer zur Stufe (28, 29) erstreckt.

7. Verbindungselement nach Anspruch 5 oder 6, **dadurch gekennzeichnet, dass** eine Führungsfläche (45) in der Drehrichtung gesehen vor der Stufe (28, 29) angeordnet ist, so dass eine Schwellenkraft zum Drehen des Verbindungselements (1) gegen die Drehrichtung aus der ersten, abgedichteten Stellung in die zweite Stellung erforderlich ist.

8. Verbindungselement nach einem der vorhergehenden Ansprüche, **dadurch gekennzeichnet, dass** ein Federrand gegen die Federkraft über eine Stufe (22, 23) in eine Bewegungsrichtung, die sich parallel zu der mittigen Achse des Verbindungselements (1) erstreckt, zum Zweck eines Verbindens der Innenhülse (3) mit der Außenhülse (2) in die erste, abgedichtete Stellung bewegt werden kann, wobei der Federrand danach in der Bewegungsrichtung gesehen unter dem Einfluss einer Federkraft eine Stellung vor der Stufe (22, 23) einnimmt, wobei die Stufe (22, 23) in dieser Stellung eine Bewegung in eine der Bewegungsrichtung entgegengesetzten Richtung verhindert.

9. Verbindungselement nach Anspruch 8 und einem der Ansprüche 4 oder 5, **dadurch gekennzeichnet, dass** das Federelement (6, 7) den Federrand aufweist.

10. Verbindungselement nach einem der vorhergehenden Ansprüche, **dadurch gekennzeichnet, dass** das Verbindungselement (1) in die Drehrichtung in die erste, abgedichtete Stellung gedreht werden kann, wobei ein Vorsprung (26, 27) auf der Innenhülse (3) in dieser Stellung an einen Vorsprung (8, 9) auf der Außenhülse (2) anstößt.

11. Verbindungselement nach einem der vorhergehenden Ansprüche, **dadurch gekennzeichnet, dass** das Verbindungselement (1) in eine der Drehrichtung entgegengesetzte Richtung in die zweite Stellung gedreht werden kann, wobei in dieser Stellung ein auf der Innenhülse vorhandenes Teil an ein auf der Außenhülse vorhandenes Teil anstößt.

12. Verbindungselement nach einem der vorhergehenden Ansprüche, **dadurch gekennzeichnet, dass** das Verbindungselement (1) eine Mutter ist, deren Innenhülse (3) mit einem Innenschraubengewinde versehen ist.

13. Verbindungselement nach einem der vorhergehenden Ansprüche 1 bis 11, **dadurch gekennzeichnet, dass** das Verbindungselement (1) ein Bolzen oder eine Schraube ist, das einen Stift aufweist, der innerhalb der Innenhülse (3) angeordnet ist, wobei der Stift mit einem Außenschraubengewinde versehen ist.

14. Verbindungselement nach einem der vorhergehenden Ansprüche 1 bis 11, **dadurch gekennzeichnet, dass** das Verbindungselement (1) eine Hohlkopfschraube ist, und dass die Außenhülse (2) einen damit fest verbundenen Vorsprung aufweist, wobei der Vorsprung mit einem Außenschraubengewinde versehen ist.

## Revendications

1. Elément de connexion (1), comprenant un manchon interne (3) et un manchon externe (2) interconnecté avec ledit manchon interne (3), ledit élément de connexion (1) pouvant être entraîné en rotation dans un sens de rotation, **caractérisé en ce qu'**il existe une interconnexion scellée entre le manchon interne (3) et le manchon externe (2) dans une première position scellée, le manchon interne (3) pouvant se déplacer par rapport au manchon externe (2) à partir de ladite première position scellée vers une seconde position, à la suite d'une rotation de l'élément de connexion (1) dans un sens opposé au dit sens de rotation, seconde position à partir de laquelle le manchon interne (3) et le manchon externe (2) ne peuvent plus être remis dans la première position scellée.

2. Elément de connexion selon la revendication 1, **caractérisé en ce que** le manchon interne (3) est décalé axialement par rapport au manchon externe (2) dans ladite seconde position.

3. Elément de connexion selon la revendication 1 ou 2, **caractérisé en ce que** le manchon interne (3) peut être entraîné en rotation sur un angle prédéterminé par rapport au manchon externe (2) dans la seconde position.

4. Elément de connexion selon l'une quelconque des revendications précédentes 1 à 3, **caractérisé en ce qu'**un des manchons (2, 3) comprend au moins une surface inclinée (30, 31) tandis que l'autre manchon comprend un élément (6, 7) qui peut être déplacé au-dessus de ladite surface inclinée (30, 31), ledit élément (6, 7) pouvant être déplacé au-dessus de ladite surface inclinée (30, 31) vers la seconde position en étant entraîné en rotation contre le sens de rotation susmentionné, seconde position dans laquelle le manchon comprenant ledit élément (6, 7) est décalé axialement par rapport à l'autre manchon.

5. Elément de connexion selon l'une quelconque des revendications précédentes, **caractérisé en ce qu'**un des manchons comprend au moins un élément à ressort (11), tandis que l'autre manchon comprend un cran (28, 29) qui s'emboîte avec l'élément à ressort (11), ledit élément à ressort (11) pouvant être déplacé contre la force du ressort au-dessus dudit cran (28, 29) dans un sens opposé au sens de rotation, ledit élément à ressort (11) adoptant une position derrière le cran (28, 29), vu dans le sens de rotation, sous l'influence d'une force du ressort dans la seconde position, position dans laquelle ledit cran (28, 29) verrouille le manchon externe (2) contre la rotation dans le sens de rotation par rapport au manchon interne (3).

6. Elément de connexion selon la revendication 5, **caractérisé en ce que** ladite surface inclinée (30, 31) est positionnée juste derrière le cran (28, 29) vu dans le sens de rotation, la surface inclinée (30, 31) s'étendant transversalement par rapport au cran (28, 29).

7. Elément de connexion selon la revendication 5 ou 6, **caractérisé en ce qu'**une surface de guidage (45) est positionnée avant le cran (28, 29), vu dans le sens de rotation, de manière à ce qu'une force seuil soit requise pour entraîner en rotation l'élément de connexion (1) contre le sens de rotation depuis la première position scellée vers la seconde position.

8. Elément de connexion selon l'une quelconque des revendications précédentes, **caractérisé en ce qu'**une lèvre de ressort peut être déplacée contre la force du ressort au-dessus d'un cran (22, 23) dans un sens de déplacement s'étendant parallèlement à l'axe central de l'élément de connexion (1) dans le but d'interconnecter le manchon interne (3) au manchon externe (2) dans la première position scellée, à la suite de quoi la lèvre de ressort adopte une position située avant le cran (22, 23) vu dans le sens de déplacement, sous l'influence d'une force du ressort, position dans laquelle le cran (22, 23) empêche le déplacement dans un sens opposé au sens de déplacement.

9. Elément de connexion selon la revendication 8 et l'une quelconque des revendications 4 ou 5, **caractérisé en ce que** ledit élément à ressort (6, 7) comprend ladite lèvre de ressort.

10. Elément de connexion selon l'une quelconque des revendications précédentes, **caractérisé en ce que** l'élément de connexion (1) peut être entraîné en rotation dans le sens de rotation, vers la première position scellée, position dans laquelle une saillie (26, 27) située sur le manchon interne (3) bute contre une saillie (8, 9) située sur le manchon externe (2).

11. Elément de connexion selon l'une quelconque des revendications précédentes, **caractérisé en ce que** l'élément de connexion (1) peut être entraîné en rotation dans un sens opposé au sens de rotation vers la seconde position, position dans laquelle une pièce située sur le manchon interne bute contre une pièce située sur le manchon externe.

12. Elément de connexion selon l'une quelconque des revendications précédentes, **caractérisé en ce que** l'élément de connexion (1) est un écrou dont le manchon interne (3) est muni d'un filetage interne.

13. Elément de connexion selon l'une quelconque des revendications précédentes 1 à 11, **caractérisé en ce que** l'élément de connexion (1) est un boulon ou une vis, un goujon étant positionné à l'intérieur du manchon interne (3), ledit goujon étant muni d'un filetage externe.

14. Elément de connexion selon l'une quelconque des revendications précédentes 1 à 11, **caractérisé en ce que** l'élément de connexion (1) est une vis creuse, et **en ce que** le manchon externe (2) comporte une saillie connectée de manière fixe à celle-ci, ladite saillie étant munie d'un filetage externe.
